# FASCICULE DE BREVET EUROPEEN

(11) **EP 4 133 367 B1**
(45) Date de publication et mention de la délivrance du brevet: **31.01.2024**
(21) Numéro de dépôt: 21714660.4
(22) Date de dépôt: 05.03.2021
(51) Int. Cl.: G06F 8/656

(54) **UNITÉ DE COMMANDE ÉLECTRONIQUE DE VÉHICULE, MÉTHODE DE MISE À JOUR DE CETTE UNITÉ ET VÉHICULE ÉQUIPÉ D'UNE TELLE UNITÉ**
ELEKTRONISCHE STEUEREINHEIT FÜR EIN FAHRZEUG, VERFAHREN ZUR AKTUALISIERUNG DIESER EINHEIT UND MIT EINER SOLCHEN EINHEIT AUSGESTATTETES FAHRZEUG
ELECTRONIC CONTROL UNIT FOR A VEHICLE, METHOD FOR UPDATING THIS UNIT AND VEHICLE EQUIPPED WITH SUCH A UNIT

(30) Priorité: 08.04.2020 FR 2003498
(43) Date de publication de la demande: 15.02.2023
(73) Titulaire: Stellantis Auto SAS, 78300 Poissy (FR)
(72) Inventeur: LANGARD, Kevin, 78140 VELIZY VILLACOUBLAY (FR); MARCHAND, Jean-sebastien, 91580 VILLECONIN (FR); BARRAL, Guillaume, 78280 GUYANCOURT (FR)
(86) Numéro de dépôt international: PCT/FR2021/050382
(87) Numéro de publication internationale: WO 2021/205085

(56) Documents cités:
- WO-A1-2018/094180
- WO-A1-2020/043361
- JAIN NEHA ET AL: "Infield firmware update: Challenges and solutions", 2016 INTERNATIONAL CONFERENCE ON COMMUNICATION AND SIGNAL PROCESSING (ICCSP), IEEE, 6 avril 2016 (2016-04-06), pages 1232-1236, XP033002942, DOI: 10.1109/ICCSP.2016.7754349

## Description

### DOMAINE TECHNIQUE

La présente invention concerne de manière générale le domaine des unités de commande électroniques de véhicule telles que les modules de supervision embarqués dans des véhicules automobiles par exemple. Ces modules visent typiquement à assurer des fonctions dédiées au comportement ou à l'état du véhicule afin de garantir ou d'améliorer la sécurité de ses occupants et, plus généralement, de celle des usagers de la route. L'invention concerne également une méthode de mise à jour d'une telle unité de commande électronique ainsi qu'un véhicule, de préférence un véhicule automobile, comprenant une telle unité.

### ART ANTÉRIEUR

Dans une optique essentiellement sécuritaire, les véhicules comportent de plus en plus de dispositifs électroniques d'assistance et de supervision des fonctionnalités associées au véhicule. Ces dispositifs peuvent faire référence à des systèmes d'aide à la conduite, d'aide au parcage, à des systèmes ABS d'antiblocage des roues, à des systèmes ESP de contrôle de la stabilité du véhicule, à des système de contrôle de la direction, du guidage ou de la vitesse du véhicule, à des dispositifs de contrôle des suspensions ou de l'assiette du véhicule, à des accéléromètres tels que ceux qui équipent des airbags par exemple, à des dispositifs de contrôle du verrouillage/déverrouillage des portes, des fenêtres, du frein de stationnement, de gestion d'alarmes ou encore à des systèmes de divertissement et/ou de navigation. Cette liste n'est bien sûr pas exhaustive mais donne un large aperçu de la diversité des fonctionnalités pouvant être contrôlées par une ou plusieurs unités de de commande électroniques embarquées dans un véhicule.

La diversité de toutes ces fonctions implique en contrepartie des mises à jour de plus en plus fréquentes des unités de commande électroniques qui contrôlent ces fonctions. Il importe en effet de pouvoir améliorer aussi souvent que possible le contrôle des fonctionnalités du véhicule par le biais de modifications, de correctifs ou d'affinement de certains paramètres ou routines, liés typiquement au comportement ou à un état du véhicule. Ces correctifs et autres améliorations sont obtenues par le remplacement ou l'adaptation du logiciel implémenté dans l'unité de commande électronique.

Le document CN 105608370 décrit une méthode pour mettre à jour un programme dans une unité de commande électronique (ECU). La méthode consiste à initialiser un redémarrage de l'ECU et à établir une cartographie de l'espace de stockage. En fonction des informations lues dans une zone de mémoire EEPROM et dans une zone de mémoire vive, il est ensuite déterminé si un chargeur d'amorçage est accessible ou pas. Dans l'affirmative, il est prévu d'entrer dans le chargeur d'amorçage, alors que dans la négative une application est lancée tout en vérifiant régulièrement la présence éventuelle d'une requête de mise à jour.

Le document US 2014/0136826 A1 décrit une méthode ainsi qu'un dispositif pour la mise à jour d'un chargeur d'amorçage au sein d'un ECU d'un véhicule. Ce document suggère plus précisément de mettre à jour, séquentiellement, un premier puis un second chargeur d'amorçage afin de pouvoir sécuriser le système.

Le document WO 2020/043361 A1 divulgue un procédé, un système de commande, un véhicule, un système et un support lisible par ordinateur non transitoire. Le code du programme d'application est téléchargé dans le système de contrôle via une interface et installé sur le système de contrôle. Ensuite, il est déterminé si le système de commande est capable de communiquer avec un dispositif externe via l'interface tout en exécutant le code de programme d'application installé, et le code de programme d'application installé est ensuite chargé au démarrage du système de commande en fonction d'une détermination que le système de contrôle a pu communiquer avec le dispositif externe.

Le document JAIN NEHA ET AL : « Infield firmware update : challenges and solutions » divulgue une mise à jour sur le terrain du micrologiciel dans les appareils embarqués. Cette architecture utilise une application basée sur PC qui agit comme un serveur, qui peut distribuer les mises à jour du micrologiciel aux appareils connectés au réseau.

Le document WO2018/094180 divulgue la mise à jour d'un logiciel dans un dispositif distant comprend l'opération sur une première image d'un code de système d'exploitation, la mise à jour sur une seconde image du code de système d'exploitation, la mise à jour sur la seconde image comprenant l'opération sur la seconde image tout en conservant la première image en mémoire, et en réponse à la détection d'une erreur d'opération sur la deuxième image, opération sur la première image du code de système d'exploitation conservé dans la mémoire accessible par l'ECU. L'opération sur la première image du code du système d'exploitation peut comprendre la sauvegarde de la première image dans la mémoire et l'exécution de la première image sur la base d'un pointeur vers la première image. La mise à jour peut comprendre la sauvegarde de la seconde image sans écraser ni effacer la première image et l'exécution de la seconde image sur la base d'un pointeur vers la seconde image.

Le document US 2013/0326126 A1 divulgue une unité de commande électronique (ECU) comprenant un programme stocké de manière réinscriptible.

Comme le montre les documents précités, le principal inconvénient des unités de commande électroniques (ECU) réside dans la mise à jour du logiciel contenu dans chacune d'elles. En effet, lorsque ce logiciel est mis à jour, le fonctionnement de ce dernier est interrompu durant tout l'intervalle de temps que nécessite le remplacement du logiciel par sa nouvelle version. Il s'ensuit que toutes les fonctionnalités du véhicule contrôlées par ce logiciel ne peuvent momentanément plus être contrôlées.

Si ces fonctionnalités impactent le confort des usagers du véhicule, par exemple lors d'une mise à jour du système de divertissement, la gravité qui en découle n'est assurément pas de même importance que si cette mise à jour touche un système de supervision du véhicule intégrant des fonctions sécuritaires. De plus, de telles mises à jour sont généralement effectuées par l'intermédiaire d'un spécialiste, ce qui contraint le détenteur du véhicule à devoir se rendre dans une enseigne particulière, typiquement un garage associé à la maque de son véhicule, pour pouvoir y effectuer la mise à jour recommandée. Cette contrainte ne permet pas de favoriser l'obtention de la nouvelle version du logiciel dans les meilleurs délais.

Par conséquent, il existe un intérêt de trouver une solution efficiente qui permette au moins en partie de résoudre les inconvénients précités.

### RESUME DE L'INVENTION

L'invention est exposée dans le jeu de revendications joint.

Dans ce but, la présente invention porte, dans un premier aspect, sur une unité de commande électronique de véhicule comprenant au moins une mémoire morte réinscriptible hébergeant :
- un chargeur d'amorçage et
- un applicatif de supervision du véhicule, ledit applicatif incluant au moins une première routine configurée pour assurer une fonction sécuritaire du véhicule, caractérisée en ce que le chargeur d'amorçage comprend une seconde routine configurée pour assurer ladite fonction sécuritaire du véhicule.

Avantageusement, l'unité de commande électronique de véhicule de la présente invention permet, en tout temps, de garantir l'exécution de la fonction sécuritaire ou des fonctions sécuritaires du véhicule. En particulier, lorsque l'applicatif de supervision est mis à jour, cette mise à jour n'enfreint pas l'exécution de cette ou de ces fonctions sécuritaires du fait qu'elle ait/aient été dupliquée(s) dans le chargeur d'amorçage, en particulier dans la seconde routine de ce chargeur d'amorçage.

En raison de sa fonction, ce chargeur d'amorçage peut être exécuté, comme tout chargeur d'amorçage, indépendamment du système d'exploitation qui, au sein de l'unité de commande électronique, dirige l'utilisation des ressources associées à cette unité par l'intermédiaire de l'applicatif de supervision du véhicule. Il s'ensuit que le bon fonctionnement des fonctions sécuritaires du véhicule, visant par exemple à commander le frein de stationnement, l'ouverture des portes ou l'activation d'une alarme, peut être garanti même lorsque le logiciel ou l'application qui, en temps normal, gère ces fonctions est mis à jour. L'assurance de l'exécution de ces fonctions sécuritaires est également garantie lors du redémarrage du système d'exploitation de l'unité de commande électronique.

Dans un mode de réalisation préféré, la fonction sécuritaire du véhicule est configurée pour être activée et/ou désactivée.

De préférence, la seconde routine est une copie de la première routine.

De façon préférentielle, ladite mémoire morte réinscriptible comprend une première partition réservée à l'applicatif de supervision du véhicule et une second partition réservée au chargeur d'amorçage.

Dans un mode de réalisation préféré, l'unité de commande électronique de véhicule comprend une interface configurée pour recevoir des données de mise à jour de l'applicatif transitant par au moins un réseau de communication sans fil.

Le chargeur d'amorçage est configuré pour :
- démarrer l'exécution de l'applicatif,
- télécharger au moins un paquet de données permettant une mise à jour de l'applicatif,
- exécuter la seconde routine assurant la fonction sécuritaire du véhicule.

De préférence, le chargeur d'amorçage est en outre configuré pour assurer que la seconde routine soit conforme à la première routine.

De préférence encore, le chargeur d'amorçage est en outre configuré pour commuter l'exécution desdites première et seconde routines avant toute exécution de la mise à jour de l'applicatif.

Dans un second aspect, l'invention porte sur une méthode de mise à jour d'une unité de commande électronique de véhicule selon l'un des modes de réalisation décrits dans la présente description ou selon une quelconque combinaison possible de ces modes de réalisation, cette méthode de mise à jour étant caractérisée en ce que, lors de la mise à jour de l'applicatif, la fonction sécuritaire du véhicule est assurée par l'exécution de la seconde routine.

Dans un troisième aspect, l'invention porte encore sur un véhicule, en particulier un véhicule automobile, comprenant au moins une unité de commande électronique de véhicule selon l'un des modes de réalisation de cette unité, telle que décrite dans la présente description, ou selon une quelconque combinaison possible de ces modes de réalisation.

### BRÈVE DESCRIPTION DES FIGURES

L'invention sera mieux comprise à la lumière des figures annexées, données à titre d'illustrations et d'exemples non-limitatifs, dans lesquels :
[Fig. 1] est une représentation schématique d'une architecture électronique de véhicule intégrant au moins une unité de commande électronique conforme au premier aspect de la présente invention ;
[Fig. 2] est une représentation schématique d'un exemple d'unité de commande électronique selon la présente invention ;
[Fig. 3] est une représentation similaire à celle de la Fig. 2 mais dans laquelle l'applicatif de supervision du véhicule se trouve dans une phase de mise à jour.

### DESCRIPTION DÉTAILLÉE

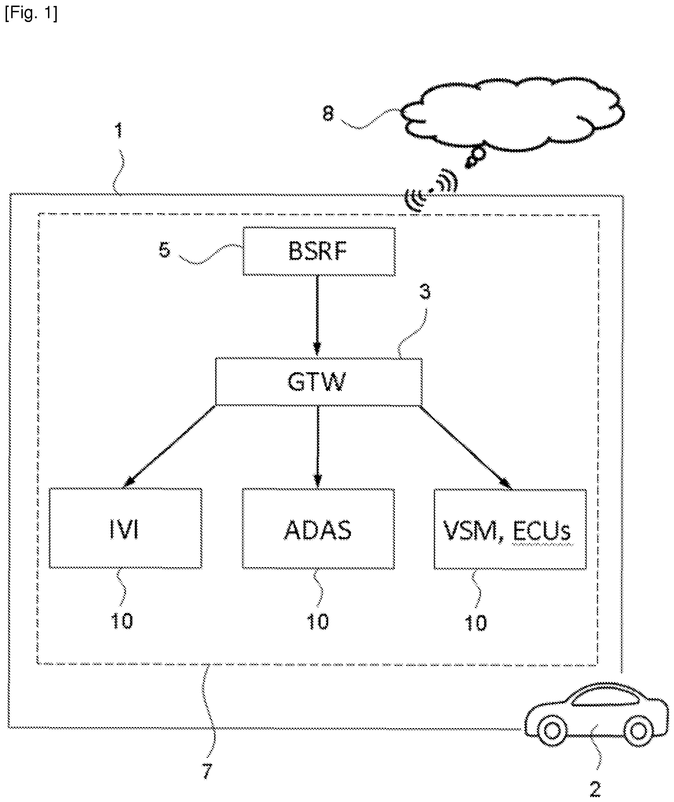

En référence à la Fig. 1, celle-ci représente, une illustration schématique d'une architecture électronique 1 de véhicule, en particulier du véhicule 2 schématiquement représenté comme étant de préférence un véhicule automobile. Cette architecture électronique 1 est configurée pour être embarquée dans le véhicule 2. Elle comprend notamment, une passerelle 3 reliée, d'une part, à une unité de communication 5 sans fil et, d'autre part, à au moins une unité de commande électronique 10 de véhicule.

Cette unité de commande électronique (ECU) 10 peut être assimilée comme étant un calculateur central du véhicule 2. Un tel calculateur pourrait servir, par exemple, de module de supervision du véhicule (VSM - acronyme anglophone pour Vehicle Supervisor Module), de système avancé d'assistance à la conduite (ADAS - acronyme anglophone pour Advanced Driver Assistance System) ou de système d'infodivertissement embarqué (IVI - acronyme anglophone pour In-Vehicle Infotainment). Bien que seuls trois calculateurs aient été représentés dans l'architecture électronique 1 de la Fig. 1, on comprendra que le nombre de calculateurs (ECUs, VSM, ASA, IVI) n'est nullement limité à trois mais pourrait être supérieur ou inférieur à ce nombre.

La passerelle 3 vise essentiellement à relier un premier réseau 7, local au véhicule 2, à un second réseau 8 externe à ce véhicule. Le premier réseau 7 est typiquement un réseau filaire de type Ethernet et/ou un réseau sans fil pouvant être de type Bluetooth. Le second réseau 8 fait quant à lui référence à un réseau de communication sans fil, ou au moins en partie sans fil, tel qu'un réseau de téléphonie mobile (GSM). L'accès au second réseau 8 s'obtient par exemple par l'intermédiaire d'un boîtier antenne 5 auquel est reliée la passerelle 3. Ce boîtier antenne 5 peut être une antenne de communication agencée à demeure dans le véhicule 2 ou pourrait être une antenne de communication d'un dispositif mobile, tel que l'antenne d'un téléphone mobile de l'un des occupants du véhicule.

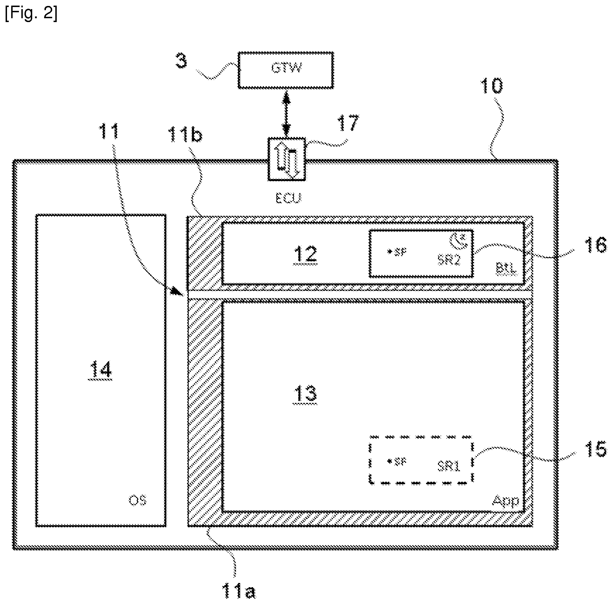

La Fig. 2 illustre, de façon schématique, un exemple d'unité de commande électronique 10 selon la présente invention. Cette unité de commande électronique pourrait être plus spécifiquement un module de supervision du véhicule (VSM) ou tout autre calculateur central du véhicule 2. Comme illustré par les hachures sur la Fig. 2, cette unit de commande électronique de véhicule comprend au moins une mémoire morte réinscriptible 11 de type flash par exemple. Cette mémoire morte réinscriptible 11 est notamment configurée pour héberger, à savoir stocker ou mémoriser, un chargeur d'amorçage 12 et un applicatif 13 de supervision du véhicule 2.

Le chargeur d'amorçage 12 (dénommé bootloader en anglais) est un logiciel qui permet de lancer au moins un système d'exploitation 14, à savoir d'exécuter le démarrage d'au moins un système d'exploitation. Ce dernier est un programme informatique ou un ensemble de programmes qui assure l'interface entre le matériel du véhicule (tels que capteurs, accéléromètres, actuateurs etc...) et le ou les applications 13. Le système d'exploitation 14 dirige l'utilisation des ressources de l'unité de commande électronique 10 par l'intermédiaire du ou des logiciels applicatifs 13. Il est donc typiquement stocké au sein de l'unité de commande électronique 10.

L'applicatif 13 est un logiciel ou un ensemble de logiciels qui permet notamment de contrôler ou de superviser généralement une pluralité de fonctions du véhicule 2. Certaines de ces fonctions sont considérées comme étant des fonctions sécuritaires SF (Acronyme anglais de Safe Function) du véhicule. De tels fonctions sécuritaires peuvent faire par exemple référence à l'ouverture/fermeture des portes ou des fenêtres du véhicule, au maintien du fonctionnement (activation / désactivation) du frein de stationnement, au maintien du contrôle du déclenchement des airbags, ou encore au système de commande d'alarmes ou d'assistance du guidage ou du freinage du véhicule. D'autres fonctions pourraient bien entendu être considérées comme fonctions sécuritaires.

L'applicatif 13 de supervision du véhicule 2 inclut au moins une première routine 15 configurée pour assurer une fonction sécuritaire SF du véhicule. Selon l'invention, le chargeur d'amorçage comprend une seconde routine 16 configurée pour assurer la fonction sécuritaire SF précitée, à savoir celle de la première routine 15.

Grâce à une telle architecture, la fonction sécuritaire SF peut en tout temps être assurée, soit par la première routine 15, en temps normal, soit par la seconde routine 16, en particulier lorsque l'applicatif 13 fait l'objet d'une mise à jour et que la première routine 15 ne peut donc pas assurer la fonction sécuritaire SF. Avantageusement, cette duplication de la routine propre à la fonction sécuritaire du véhicule autorise des mises à jour de l'applicatif 13 sans porter préjudice à la sécurité des usagers du véhicule (ou de celle des usagers de la route se trouvant à proximité de ce véhicule), puisque la ou les fonctions sécuritaires de ce dernier peut ou peuvent être maintenue(s). Avantageusement encore, les mises à jour de l'applicatif 13 peuvent ainsi être plus fréquentes puisqu'elles n'affectent pas la ou les fonctions sécuritaires SF du véhicule.

En variante, plusieurs fonctions sécuritaires SF pourraient être assurées, typiquement par la première routine 15. Dans ce cas, les même fonctions sécuritaires seraient dupliquées et pourraient faire l'objet de la seconde routine 16.

Dans un mode de réalisation préféré, la fonction sécuritaire SF du véhicule est configurée pour être activée et/ou désactivée. Une telle fonction se distingue donc d'une condition à satisfaire, par exemple une condition préalable à remplir pour pouvoir entreprendre un processus ou une étape subséquente telle qu'une mise à jour par exemple.

De préférence, la seconde routine 16 est une copie de la première routine 15. Ainsi, la seconde routine se distingue d'un simple renvoi à la première routine de l'applicatif 13 puisqu'elle constitue une routine à part entière qui se distingue de la première routine 15 dans le sens qu'elle peut être exécutée indépendamment de la première routine.

Comme illustré à la Fig. 1, la mémoire morte réinscriptible 11 comprend de préférence une première partition 11a réservée à l'applicatif 13 de supervision du véhicule et une seconde partition 11b réservée au chargeur d'amorçage. Les partitions 11a et 11b sont donc distinctes l'une de l'autre, ceci indépendamment des données qu'elles contiennent. De manière alternative, chacune de ces partitions 11a, 11b pourrait faire l'objet d'une mémoire morte réinscriptible 11 distincte.

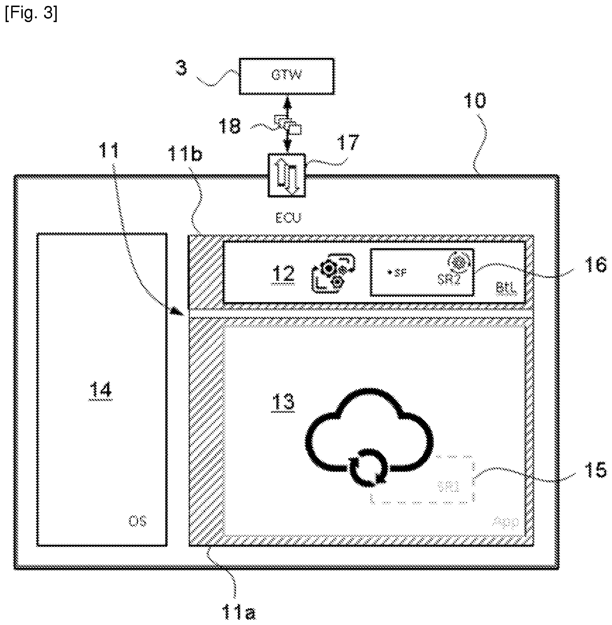

Dans un mode de réalisation préféré, l'unité de commande électronique 10 de véhicule comprend en outre une interface 17 configurée pour recevoir des données de mise à jour transitant par au moins un réseau de communication sans fil tel que le second réseau 8 illustré à la Fig. 1. Les données de mise à jour sont typiquement celles qui permettent la mise à jour de l'applicatif 13. Ces données sont par exemple transmises, depuis un serveur distant (centre de gestion), sous forme de paquets 18 de données (Fig. 3) acheminés jusqu'au véhicule 2 par l'intermédiaire du réseau de communication 8 sans fil.

Le chargeur d'amorçage 12 est configuré pour :
- démarrer l'exécution de l'applicatif 13,
- télécharger au moins un paquet 18 de données permettant la mise à jour de l'applicatif 13, et
- exécuter la seconde routine 16 assurant la fonction sécuritaire SF du véhicule 2.

A noter que cette liste d'opérations n'est pas nécessairement représentative d'un ordre d'exécution particulier. De plus, le chargeur d'amorçage 12 n'a aucune contrainte à devoir exécuter l'ensemble de ces opérations de manière successive. On comprendra donc qu'il est capable d'exécuter ces opérations soit ponctuellement soit successivement dans un ordre logique qui pourrait être déterminé par avance et dépendre d'une situation dans laquelle il pourrait se trouver. Pour ce faire, le chargeur d'amorçage pourrait comprendre au moins une instruction de démarrage de l'exécution de l'applicatif 13, au moins une instruction d'exécution du téléchargement d'au moins un paquet 18 de données de mise à jour de l'applicatif 13, et au moins une instruction d'exécution de la seconde routine 16 comportant la fonction sécuritaire SF à assurer au sein du véhicule.

Dans un autre mode de réalisation, le chargeur d'amorçage 12 est en outre configuré pour assurer que la seconde routine 16 soit conforme à la première routine 15. En d'autres termes, le chargeur d'amorçage 12 comprend au moins une instruction où une séquence d'instructions, à savoir une portion de code informatique, qui, lorsqu'elle est exécutée, rend la seconde routine 16 conforme à la première routine. Dans ce but, le chargeur d'amorçage pourrait remplacer la seconde routine 16 par la première routine 15 ou, en variante, modifier ou adapter la seconde routine 16 à la première routine 15. Ces opérations sont typiquement effectuées après que la première routine 15 ait été mise à jour, de préférence après chaque mise à jour de la première routine 15. Etant donné que la première routine fait partie de l'applicatif 13, la mise à jour de cette première routine se fait donc au travers de la mise à jour de l'applicatif.

Dans un mode de réalisation préféré, le chargeur d'amorçage 12 est en outre configuré pour commuter l'exécution des première et seconde routines 15, 16 avant toute exécution de la mise à jour de l'applicatif 13. Cette commutation peut être obtenue par une instruction du code de programmation qui pilote les actions du chargeur d'amorçage. De préférence encore, cette commutation s'opère de la première routine 15 vers la seconde routine 16 de manière à ce que l'exécution de la seconde routine puisse prendre le relai sur la première routine dès que cette dernière ne peut plus être exécutée en raison la mise à jour de l'applicatif qui la contient. Le basculement d'une routine à l'autre s'opère de préférence par une activation de l'exécution de la seconde routine 16, puis par la désactivation de l'exécution de la première routine 15.

En référence à la Fig. 2, on remarquera que cette dernière illustre une situation normale dans laquelle l'applicatif 13 est fonctionnel. Dans pareil cas, aucune mise à jour de l'applicatif n'est effectuée. La fonction sécuritaire SF du véhicule est donc assurée par la première routine 15 incluse dans cet applicatif. Pour cette raison, la seconde routine 16 est de préférence mise en sommeil ou désactivée. Cet état désactivé ou de veille est illustré à la Fig. 2 par un pictogramme en forme de lune qui a été apposé sur la seconde routine 16.

En revanche, la Fig. 3 illustre un autre état dans lequel l'applicatif 13 de supervision du véhicule se trouve dans une phase de mise à jour. Cette phase de mise à jour est représentée par l'arrivée des paquets de données 18 de mise à jour, ainsi que par une illustration grisée de l'applicatif 13. Un second pictogramme qui représente un nuage illustrant un téléchargement de données par une boucle de flèches tournantes a en outre été apposé sur l'applicatif 13. On remarquera encore sur cette Fig. 3 que le pictogramme en forme de lune, qui était représentatif de l'inactivité de la seconde routine 16 sur la Fig. 2, a disparu et a été remplacé par un une roue dentée en mouvement. Par ce biais, on comprendra que la seconde routine 16 a pris le relais sur la première afin d'assurer la fonction sécuritaire SF lors de la phase de mise à jour de l'applicatif 13.

Dans un second aspect, l'invention porte sur une méthode de mise à jour de l'unité de commande électronique 10 qui a été décrite précédemment selon l'un quelconque de ses modes de réalisation ou selon l'une quelconque possible combinaison de ces modes de réalisation. Selon cette méthode, la fonction sécuritaire SF du véhicule 2 est, lors de la mise à jour de l'applicatif 13, assurée par l'exécution de la seconde routine 16. Ainsi, la seconde routine 16 est de préférence activée avant la mise à jour de l'applicatif, en particulier juste avant que cette mise à jour ne débute. L'activation de la seconde routine 16 se traduit typiquement par un basculement du contrôle ou de la commande de la fonction sécuritaire SF de la première routine 15 vers la seconde routine 16. Par ce biais, le maintien de l'état fonctionnel de cette fonction est avantageusement assuré en continu, en particulier y compris lors de la mise à jour de l'applicatif.

De préférence, la mise à jour est effectuée par l'intermédiaire d'une connexion sans fil. Cette connexion peut typiquement être mise en oeuvre via un réseau de communication de téléphone mobile par exemple. A la fin de l'installation des paquets 18 de mis à jour dans la zone de mémoire 11a réservée à l'applicatif 13, le chargeur d'amorçage 12 redémarre le système d'exploitation 14 de l'unité de commande électronique 10 afin que la nouvelle version de l'applicatif 13 puisse être correctement prise en compte et être opérationnelle. Une fois que cette nouvelle version est opérationnelle, un second basculement visant à activer la première routine 15 de cette nouvelle version et à désactiver la seconde routine 16 est effectué.

Une fois la mise à jour de l'applicatif 13 effectuée, et de préférence encore une fois que le second basculement a eu lieu, la seconde routine 16 stockée dans le chargeur d'amorçage 12 est à son tour mise à jour sur la base de la nouvelle première routine 15 issue de la mise à jour de l'applicatif. La mise à jour de la seconde routine 16 peut consister en une modification ou une adaptation de la seconde routine ou en un remplacement de cette seconde routine par la nouvelle version de la première routine.

La fonction sécuritaire SF peut être l'une quelconque des fonctions sécuritaires déjà évoquées précédemment dans la présente description. Certaines de ces fonctions peuvent en outre constituer des fonctions réglementaires dans certains pays. Ainsi, la présente invention permet d'accroître la sécurité des personnes par des mises à jours plus fréquentes et plus aisées tout en se conformant aux législations les plus strictes en vigueur dans certains pays.

Dans un troisième aspect, l'invention porte sur un véhicule 2, en particulier un véhicule automobile, comprenant au moins une unité de commande électronique 10 selon l'un des modes de réalisation décrit dans la présente description ou selon l'une quelconque combinaison possible de ces modes de réalisation.

Dans un dernier aspect, l'invention pourrait encore porter sur une architecture électronique 1 de véhicule 2, telle que celle illustrée en exemple à la Fig. 1. En particulier, une telle architecture électronique 1 comprendrait :
- au moins un module de supervision de véhicule selon l'un des modes de réalisation décrit dans la présente description ou selon l'une quelconque combinaison possible de ces modes de réalisation,
- une passerelle 3, et
- une unité de communication 5 sans fil.

A noter que le module de supervision de véhicule précité pourrait être aussi bien une unité de commande électronique (ECU), un système d'assistance à la conduite (ADAS), un système d'infodivertissement embarqué (IVI) ou n'importe quel autre calculateur central du véhicule 2.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Unité de commande électronique (10) de véhicule (2) comprenant au moins une mémoire morte réinscriptible (11) hébergeant :
- un chargeur d'amorçage (12) et
- un applicatif (13) de supervision du véhicule (2), ledit applicatif incluant au moins une première routine (15) configurée pour assurer une fonction sécuritaire (SF) du véhicule (2),
dans lequel le chargeur d'amorçage (12) comprend une seconde routine (16) configurée pour assurer ladite fonction sécuritaire (SF) du véhicule (2), et
dans lequel le chargeur d'amorçage (12) est configuré pour:
- démarrer l'exécution de l'applicatif (13),
- télécharger au moins un paquet (18) de données permettant une mise à jour de l'applicatif (13), et
- exécuter la seconde routine (16) assurant la fonction sécuritaire (SF) du véhicule.

2. Unité de commande électronique (10) de véhicule selon la revendication 1, telle que la fonction sécuritaire (SF) du véhicule est configurée pour être activée ou désactivée.

3. Unité de commande électronique (10) de véhicule selon l'une des revendications précédentes, telle que la seconde routine (16) est une copie de la première routine (15).

4. Unité de commande électronique (10) de véhicule selon la revendication 1, telle que ladite mémoire morte réinscriptible (11) comprend une première partition (11a) réservée à l'applicatif (13) de supervision du véhicule et une seconde partition (11b) réservée au chargeur d'amorçage (12).

5. Unité de commande électronique (10) de véhicule selon l'une des revendications précédentes, telle qu'elle comprend une interface (17) configurée pour recevoir des données (18) de mise à jour de l'applicatif (13) transitant par au moins un réseau de communication (8) sans fil.

6. Unité de commande électronique (10) de véhicule selon l'une des revendications précédentes, telle que le chargeur d'amorçage (12) est en outre configuré pour assurer que la seconde routine (16) soit conforme à la première routine (15).

7. Unité de commande électronique (10) de véhicule selon la revendication 6, telle que le chargeur d'amorçage (12) est en outre configuré pour commuter l'exécution desdites première et seconde routines (15, 16) avant toute exécution de la mise à jour de l'applicatif (13).

8. Méthode de mise à jour d'une unité de commande électronique (10) de véhicule selon l'une des revendications précédentes.

9. Véhicule (2) automobile comprenant au moins une unité de commande électronique (10) de véhicule selon l'une des revendications 1 à 7. 1

## Patentansprüche

1. Elektronische Steuereinheit (10) des Fahrzeugs (2), die mindestens einen wiederbeschreibbaren Nur-Lese-Speicher (11) umfasst, der Folgendes beherbergt:
- einen Bootloader (12) und
- eine Anwendung (13) zur Überwachung des Fahrzeugs (2), wobei die Anwendung mindestens eine erste Routine (15) umfasst, die dazu konfiguriert ist, eine Sicherheitsfunktion (SF) des Fahrzeugs (2) sicherzustellen,
wobei der Bootloader (12) eine zweite Routine (16) umfasst, die so konfiguriert ist, dass sie die Sicherheitsfunktion (SF) des Fahrzeugs (2) gewährleistet, und
wobei der Bootloader (12) so konfiguriert ist, dass er:
- die Ausführung der Anwendung starten (13),
- Herunterladen mindestens eines Datenpakets (18), das eine Aktualisierung der Anwendung (13) ermöglicht, und
- die zweite Routine (16) ausführen, die die Sicherheitsfunktion (SF) des Fahrzeugs gewährleistet.

2. Elektronisches Fahrzeugsteuergerät (10) nach Anspruch 1, derart, dass die Sicherheitsfunktion (SF) des Fahrzeugs aktiviert oder deaktiviert werden kann.

3. Elektronisches Fahrzeugsteuergerät (10) nach einem der vorhergehenden Ansprüche, derart, dass die zweite Routine (16) eine Kopie der ersten Routine (15) ist.

4. Elektronische Fahrzeugsteuereinheit (10) nach Anspruch 1, derart, dass der wiederbeschreibbare Nur-Lese-Speicher (11) eine erste Partition (11a), die für die Fahrzeugüberwachungsanwendung (13) reserviert ist, und eine zweite Partition (11b) umfasst, für den Bootloader (12) reserviert.

5. Elektronisches Fahrzeugsteuergerät (10) nach einem der vorhergehenden Ansprüche, **dadurch gekennzeichnet, dass** es eine Schnittstelle (17) aufweist, die zum Empfang von Daten (18) zur Aktualisierung der Anwendung (13) über mindestens ein drahtloses Kommunikationsnetzwerk ausgelegt ist (8).

6. Elektronisches Fahrzeugsteuergerät (10) nach einem der vorhergehenden Ansprüche, derart, dass der Bootloader (12) weiterhin dafür konfiguriert ist, sicherzustellen, dass die zweite Routine (16) mit der ersten Routine (15) übereinstimmt.

7. Eine elektronische Fahrzeugsteuereinheit (10) nach Anspruch 6, derart, dass der Bootloader (12) außerdem so konfiguriert ist, dass er die Ausführung der ersten und zweiten Routine (15, 16) vor jeder Ausführung des Anwendungsupdates umschaltet (13).

8. Verfahren zur Aktualisierung eines elektronischen Fahrzeugsteuergeräts (10) nach einem der vorhergehenden Ansprüche.

9. Kraftfahrzeug (2) umfassend mindestens ein elektronisches Fahrzeugsteuergerät (10) nach einem der Ansprüche 1 bis 7.

## Claims

1. Electronic control unit (10) for a vehicle (2) comprising at least one rewritable read-only memory (11) housing :
- a bootloader (12) and
- an application (13) for supervising the vehicle (2), said application including at least a first routine (15) configured to ensure a safety function (SF) of the vehicle (2),
in which the boot loader (12) includes a second routine (16) configured to ensure said safety function (SF) of the vehicle (2), and
wherein the bootloader (12) is configured to:
- start execution of the application (13),
- download at least one data packet (18) enabling the application software (13) to be updated, and
- executing the second routine (16) providing the vehicle safety function (SF).

2. A vehicle electronic control unit (10) according to claim 1, such that the vehicle security function (SF) is configured to be activated or deactivated.

3. A vehicle electronic control unit (10) according to one of the preceding claims, such that the second routine (16) is a copy of the first routine (15).

4. A vehicle electronic control unit (10) according to claim 1, such that said rewritable read-only memory (11) comprises a first partition (11a) reserved for the vehicle supervision application (13) and a second partition (11b) reserved for the bootloader (12).

5. Vehicle electronic control unit (10) according to one of the preceding claims, such that it comprises an interface (17) configured to receive data (18) for updating the application (13) transiting via at least one wireless communication network (8).

6. A vehicle electronic control unit (10) according to one of the preceding claims, such that the bootloader (12) is further configured to ensure that the second routine (16) conforms to the first routine (15).

7. A vehicle electronic control unit (10) according to claim 6, such that the bootloader (12) is further configured to switch execution of said first and second routines (15, 16) prior to any execution of the application update (13).

8. Method of updating a vehicle electronic control unit (10) according to one of the preceding claims.

9. Motor vehicle (2) comprising at least one electronic vehicle control unit (10) according to one of claims 1 to 7.
